# EUROPÄISCHE PATENTSCHRIFT

(11) **EP 3 103 555 B1**
(45) Veröffentlichungstag und Bekanntmachung des Hinweises auf die Patenterteilung: **09.05.2018**
(21) Anmeldenummer: 15171826.9
(22) Anmeldetag: 12.06.2015
(51) Int. Cl.: B04B 7/02, F16F 7/06

(54) **LABORZENTRIFUGE MIT DÄMPFUNGSEINRICHTUNG**
LABORATORY CENTRIFUGE WITH DAMPING DEVICE
CENTRIFUGEUSE DE LABORATOIRE DOTÉE D'UN DISPOSITIF D'AMORTISSEMENT

(43) Veröffentlichungstag der Anmeldung: 14.12.2016
(73) Patentinhaber: Sigma Laborzentrifugen GmbH, 37520 Osterode/Harz (DE)
(72) Erfinder: Sobota, Oliver, 37431 Bad Lauterberg (DE); Peinemann, Rüdiger, 37520 Osterode (DE)
(74) Vertreter: REHBERG HÜPPE + PARTNER

(56) Entgegenhaltungen:
- WO-A1-2006/027275
- DE-A1- 1 708 421
- US-A1- 2003 220 181
- US-A1- 2007 072 759
- US-A1- 2014 329 659

## Beschreibung

### TECHNISCHES GEBIET DER ERFINDUNG

Die Erfindung betrifft eine Laborzentrifuge.

Laborzentrifugen der hier vorliegenden Art finden Einsatz bspw. in der Biotechnologie, der pharmazeutischen Industrie, der Medizintechnik und der Umweltanalytik. Mittels einer Laborzentrifuge erfolgt ein Zentrifugieren eines Produkts, insbesondere eines Behälters oder Gefäßes mit darin angeordneter Probe oder Substanz, oder einer Vielzahl derartiger Produkte mit Drehzahlen, welche mehr als 3.000 U/min, bspw. mehr als 15.000 U/min, betragen können. Infolge der Zentrifugation sollen bspw. auf das Produkt wirkende Beschleunigungen erzeugt werden, welche mehr als 15.000 x g (insbes. mehr als 16.000 x g, mehr als 20.000 x g bis hin zu mehr als 60.000 x g) betragen können. Durch die Zentrifugation soll ein von der Probe oder der Substanz gebildetes Stoffgemisch in Komponenten unterschiedlicher Dichte zerlegt werden. Je nach den chemischen und/oder physikalischen Eigenschaften des Stoffgemisches kann während der Zentrifugation ergänzend eine gezielte Steuerung der Druck- und/oder Temperaturverhältnisse erfolgen. Um lediglich einige Beispiele zu nennen, kann der Einsatz einer Laborzentrifuge im Zusammenhang mit einer Polymerase-Kettenreaktion (PCR), einer Bestimmung des Hämatokrits, zytologischen Untersuchungen oder dem Zentrifugieren von Mikrotitern, Blutbeuteln, Erdölgefäßen oder Blutgefäßen u. ä. erfolgen.

### STAND DER TECHNIK

Laborzentrifugen verfügen üblicherweise über einen Grundkörper sowie einen Deckel, der verschwenkbar um eine Schwenkachse an dem Grundkörper gelagert ist. In einer Schließstellung des Deckels ist ein Innenraum, in welchem das mindestens eine zu zentrifugierende Produkt angeordnet ist, geschlossen, so dass ein Zentrifugieren erfolgen kann und gezielt eine gewünschte fluidische Strömung in dem Innenraum herbeigeführt werden kann sowie eine gezielte Steuerung oder Regelung des Drucks und der Temperatur in dem Innenraum erfolgen kann. In einer maximalen Öffnungsstellung des Deckels ist der Innenraum der Laborzentrifuge zugänglich, so dass das zu zentrifugierende Produkt in den Innenraum eingebracht werden kann und ein bereits zentrifugiertes Produkt aus dem Innenraum entnommen werden kann. Das Unternehmen Sigma Laborzentrifugen GmbH vertreibt unter der Produktkennzeichnung "2-16 KL" Laborzentrifugen, bei welchen zwischen dem Deckel und dem Grundkörper eine Dämpfungseinrichtung wirkt, welche als Gasdruckdämpfer ausgebildet ist. Mittels des Gasdruckdämpfers kann die Öffnungs- und Schließcharakteristik des Deckels konstruktiv beeinflusst werden. Der Gasdruckdämpfer verfügt hierbei über eine Endlagendämpfung, welche mit einer Annäherung an den maximalen Öffnungswinkel des Deckels wirksam wird.

Eine gattungsgemäße Laborzentrifuge ist aus der Druckschrift US2014329659 bekannt.

### AUFGABE DER ERFINDUNG

Der vorliegenden Erfindung liegt die Aufgabe zugrunde, alternative oder kumulative Möglichkeiten für eine Beeinflussung der Öffnungs- und Schließcharakteristik des Deckels einer Laborzentrifuge vorzuschlagen.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt vor, eine zwischen Deckel und Grundkörper der Laborzentrifuge wirkende Dämpfungseinrichtung mit einem an dem Grundkörper gehaltenen Reibelement sowie einem mit dem Deckel verschwenkten Reibelement zu bilden. Die Reibelemente werden über eine Normalkraft aneinandergepresst. Durch die Anpressung der Reibelemente aneinander wird eine Reibkraft zwischen den Reibelementen und damit zwischen dem Grundkörper und dem Deckel erzeugt, welche eine Dämpfung bewirkt. Hierbei sind die Normalkraft und die erzeugte Reibkraft nicht unabhängig vom Öffnungswinkel. Vielmehr ist (mit einer beliebigen Abhängigkeit) die Normalkraft (und damit auch die hervorgerufene Reibkraft) von dem Öffnungswinkel des Deckels gegenüber dem Grundkörper abhängig.

Um lediglich einige die Erfindung nicht beschränkende Beispiele zu nennen, kann für mindestens einen Öffnungswinkelbereich keine Normalkraft und keine Reibkraft erzeugt werden, während in mindestens einem anderen Öffnungswinkelbereich eine (konstante oder vom Öffnungswinkel abhängige) Normalkraft und Reibkraft erzeugt wird. Möglich ist aber auch, dass für jeden Öffnungswinkel eine Normalkraft und eine Reibkraft erzeugt wird, deren Beträge sich aber dann abhängig vom Öffnungswinkel ändern kann. Sofern eine Änderung der Normalkraft in Abhängigkeit des Öffnungswinkels erfolgt, kann diese zumindest stückweise linear oder kurvenförmig, mit einem Knick oder mit einem Sprung des Normalkraftverlaufs in Abhängigkeit von dem Öffnungswinkel erfolgen.

Die erfindungsgemäße Dämpfungseinrichtung kann alternativ oder kumulativ die folgenden technischen Vorteile und Wirkungen nutzen, ohne dass dies zwingend der Fall sein muss:
- Ohne Dämpfungseinrichtung führt eine Bewegung des Deckels in mindestens eine Endlage, bei welcher es sich um die maximale Öffnungsstellung und/oder die Schließstellung handeln kann, zu einem abrupten Abbremsen des Deckels durch den Grundkörper, was bspw. durch das Anschlagen an einem Anschlag mit Erreichen des maximalen Öffnungswinkels oder der Schließstellung bedingt ist. Der derart erzeugte Stoß auf den Grundkörper kann zur Folge haben, dass eine unerwünschte erneute Durchmischung der zuvor während der Zentrifugation getrennten Komponenten der Probe erfolgt. Erzeugt erfindungsgemäß die Dämpfungseinrichtung ausschließlich mit Annäherung an eine Endlage eine Normalkraft und eine Reibkraft oder mit Annäherung an eine Endlage eine erhöhte Normalkraft und Reibkraft, kann ein derartiger Stoß zumindest abgemildert werden, so dass das mit der Zentrifugation herbeigeführte Ergebnis verbessert sein kann.
- Durch die Dämpfungseinrichtung kann dem Benutzer, welcher manuell den Deckel verschwenkt, gezielt eine haptische Rückmeldung gegeben werden, wenn eine spezifische Öffnungsstellung des Deckels erreicht ist. So kann dem Benutzer auch mit Annäherung an eine Endlage über die Dämpfungseinrichtung über die Erzeugung der Reibkraft oder einer erhöhten Reibkraft signalisiert werden, dass die Endlage erreicht ist oder bald erreicht sein wird.

- Während fluidische Dämpfungseinrichtungen üblicherweise eine geschwindigkeitsproportionale Dämpfungskraft erzeugen, kann für den Einsatz einer auf einer Reibkraft basierenden Dämpfungseinrichtung der Einfluss der Öffnungsgeschwindigkeit auf die von der Dämpfungseinrichtung herbeigeführte Dämpfung zumindest reduziert werden.
- Durchaus möglich ist, dass eine Öffnungs- und Schließcharakteristik des Deckels neben der Dämpfungseinrichtung durch weitere konstruktive Maßnahmen beeinflusst wird. Um lediglich einige nicht beschränkende Beispiele zu nennen, kann die Öffnungs- und Schließcharakteristik beeinflusst werden durch ein etwaiges weiteres beliebiges Dämpfungselement, ein zwischen Deckel und Grundkörper wirkendes Federelement und die exzentrische Lage des Schwerpunkts des Deckels gegenüber der Schwenkachse des Deckels. Mit Einsatz der erfindungsgemäßen, auf einer Reibkraft basierenden Dämpfungseinrichtung werden die Möglichkeiten für die Beeinflussung der Öffnungs- und Schließcharakteristik erweitert.
- Möglich ist auch, dass mittels der Dämpfungseinrichtung ein oder mehrere multistabile Öffnungswinkel oder ein multistabiler Öffnungswinkelbereich des Deckels gewährleistet wird. Ein "multistabiler Öffnungswinkelbereich" liegt dabei dann vor, wenn der Deckel bei manueller Herbeiführung eines Öffnungswinkels durch den Benutzer, der in dem multistabilen Öffnungswinkelbereich liegt, infolge der durch die Dämpfungseinrichtung herbeigeführten Reibung diesen Öffnungswinkel auch beibehält, wenn vom Benutzer keine manuellen Kräfte mehr auf den Deckel aufgebracht werden. In diesem Fall gleicht die Reibung der Dämpfungseinrichtung eine etwaige Gewichtskraft des Deckels und ggf. weitere auf den Deckel wirkende Kräfte wie die Kraft einer Öffnungsfeder aus. Dies ist für eine fluidisch wirkende Dämpfungseinrichtung nicht möglich, da sich bei einer fluidischen Dämpfungseinrichtung ein Deckel infolge des Eigengewichts langsam aus einer manuell herbeigeführten Öffnungsstellung in Richtung der Schließstellung bewegt.
- Mittels der auf Reibung basierenden Dämpfungseinrichtung kann je nach Gestaltung der Reibverhältnisse und die konstruktive Vorgabe des Normalkraftverlaufs zwischen den Reibelementen über den Öffnungswinkel konstruktiv Einfluss auf die Öffnungs- und Schließcharakteristik genommen werden.

Für die Anordnung der Reibelemente an dem Deckel und Grundkörper sowie deren Ausrichtung gibt es im Rahmen der Erfindung vielfältige Möglichkeiten. Für einen Vorschlag der Erfindung ist die Normalkraft parallel zu der Schwenkachse orientiert. Ändert sich die Normalkraft über den Öffnungswinkel nicht, so ist die Normalkraft exakt parallel zu der Schwenkachse orientiert. Eine leichte Neigung der Normalkraft gegenüber der Schwenkachse kann dann auftreten, wenn eine Veränderung der Normalkraft mit einer Veränderung des Öffnungswinkels angestrebt ist.

Für einen weiteren Vorschlag der Erfindung wirkt die Normalkraft in einer Ebene, die quer zu der Schwenkachse orientiert ist. Möglich ist hierbei, dass, sofern die Normalkraft mit Veränderung des Öffnungswinkels konstant sein soll, die Normalkraft radial zu der Schwenkachse orientiert ist. Mit einer angestrebten Veränderung der Normalkraft mit Veränderung des Öffnungswinkels kann eine Komponente der Normalkraft entstehen, welche zwar in der Ebene, die quer zu der Schwenkachse orientiert ist, wirkt, aber in Umfangsrichtung um die Schwenkachse wirkt.

Im Rahmen der Erfindung können beliebige Kontaktflächen der Reibelemente Einsatz finden. Für eine erfindungsgemäße Ausgestaltung der Laborzentrifuge ist mindestens ein Reibelement mit einer Wendelfläche gebildet, die sich um die Schwenkachse erstreckt. Kontaktiert ein Reibelement das mit der Wendelfläche gebildete Reibelement, hat dies zur Folge, dass sich mit der Veränderung des Öffnungswinkels die Kontaktfläche zwischen den Reibelementen entlang der Wendelfläche verschiebt. Bei elastischer Abstützung mindestens eines Reibelements in Richtung der Schwenkachse führt diese Bewegung entlang der Wendefläche zu einer Änderung der Normalkraft mit der Veränderung des Öffnungswinkels des Deckels.

Die Steigung der Wendelfläche, unter welcher die Verlagerung der Wendelfläche in Richtung der Schwenkachse mit hypothetischem einmaligem vollem Umlaufen um die Schwenkachse (Umlaufwinkel 360°) verstanden wird, kann grundsätzlich beliebig sein und konstant sein oder variieren. Für eine erfindungsgemäße Ausgestaltung beträgt die Steigung 5 bis 15 mm, insbesondere 8 bis 12 mm, was sich unter Beachtung der technisch sinnvollen Reibpaarungen und der gewünschten Dämpfungswirkung als vorteilhaft erwiesen hat.

Durchaus möglich ist, dass ein Reibelement als Wendelfläche ausgebildet ist, während das andere, an der Wendelfläche mit der Veränderung des Öffnungswinkels entlanggleitende Reibelement als Reibklotz, Reibstift (bspw. mit entsprechend der Wendefläche geneigter Stirnseite oder halbkugelförmiger Stirnseite) o. ä. ausgebildet ist. Möglich ist aber auch, dass beide Reibelemente mit einander entsprechend geneigten Wendelflächen ausgebildet sind, womit sich eine große Kontaktfläche zwischen den Reibelementen im Bereich der aneinanderliegenden Wendelflächen und u. U. sogar eine sich verändernde Kontaktfläche mit einer Veränderung des Öffnungswinkels ergibt.

Für eine andere Ausführungsform der Erfindung ist ein Reibelement mit einer sich um die Schwenkachse erstreckenden Nockenfläche oder Innenfläche gebildet. Der Abstand der Nockenfläche oder Innenfläche von der Schwenkachse verändert sich in Umfangsrichtung um die Schwenkachse. Liegt ein anderes Reibelement an der Nockenfläche oder Innenfläche an, ändert sich je nach Veränderung des Abstands der Nockenfläche oder Innenfläche von der Schwenkachse mit einer Veränderung des Öffnungswinkels die zwischen den Reibelementen wirkende Normalkraft. Auch hier ist grundsätzlich möglich, dass nur ein Reibelement mit einer Nockenfläche oder Innenfläche gebildet ist, während das andere Element als beliebiger Reibklotz, Reibkörper, Reibstift u. ä. ausgebildet ist, welches dann mit der Nockenfläche oder Innenfläche in Wirkverbindung tritt. Möglich ist aber auch, dass beide Reibelemente mit einer Nockenfläche und/oder Innenfläche ausgebildet sind, welche dann miteinander in Wirkverbindung treten, so dass sich die Veränderung der Normalkraft aus der Überlagerung der Veränderung der Abstände der beiden Nockenflächen oder Innenflächen von der Schwenkachse ergibt.

Für eine weitere erfindungsgemäße Ausführungsform der Laborzentrifuge ist ein Anschlag zur Begrenzung der Schwenkbewegung, insbesondere für die Vorgabe des maximalen Öffnungswinkels, vorhanden.

Grundsätzlich kann der Anschlag an beliebiger Stelle zwischen Deckel und Grundkörper wirken und somit auch entfernt von der Dämpfungseinrichtung und den Reibelementen angeordnet sein. Für einen erfindungsgemäßen Vorschlag ist der Anschlag mit einer Anschlagfläche gebildet. Diese Anschlagfläche kann unmittelbar an die Nockenfläche oder Wendelfläche anschließen, was mit einem kurvenförmigen Übergang oder mit einem Knick oder Sprung erfolgen kann. Alternativ oder kumulativ möglich ist, dass der Anschlag mit der Anschlagfläche von dem Reibelement ausgebildet ist, womit dieses multifunktional genutzt werden kann. Um lediglich ein nicht beschränkendes Beispiel zu nennen, kann das Reibelement einerseits eine Reibfläche ausbilden, deren Flächennormale bis auf eine gewisse Neigung in Richtung der Schwenkachse orientiert ist oder in der Ebene liegt, die quer zu der Schwenkachse orientiert ist, sowie andererseits mit einer Anschlagfläche, deren Flächennormale in Umfangsrichtung um die Schwenkachse orientiert ist, den Anschlag bilden.

Für die Bildung der Reibelemente gibt es vielfältige konstruktive Möglichkeiten. So kann bspw. durchaus ein Reibelement integral von dem Grundkörper oder dem Deckel ausgebildet sein. Für einen Vorschlag der Erfindung ist aber das an dem Grundkörper gehaltene Reibelement von einem Reibelementkörper gebildet, welcher an einem Lagerbock des Grundkörpers montiert ist. Möglich ist beispielsweise für diese Ausgestaltung, dass bei einem Verschleiß des Reibelements auf einfache Weise der Reibelementkörper ausgetauscht werden kann. Unter Umständen ermöglicht auch die separate Ausbildung des Reibelementkörpers eine vereinfachte Montage und/oder Demontage des Deckels mit dem Grundkörper. Möglich ist auch, dass über Einsatz unterschiedlicher Reibelementkörper unterschiedliche Öffnungs- und Schließcharakteristika, u. U. auch mit unterschiedlichen Anschlägen zur Vorgabe des maximalen Öffnungswinkels, herbeiführbar sind.

Möglich ist auch, dass das mit dem Deckel verschwenkte Reibelement von einem Reibelementkörper gebildet ist, welcher an dem Deckel montiert ist.

In weiterer Ausgestaltung dieses Lösungsgedankens ist mit dem Reibelementkörper, der das mit dem Deckel verschwenkte Reibelement bildet, integral ein Lagerauge für das Lager zur Ermöglichung der Schwenkbewegung des Deckels gebildet, so dass in diesem Fall der Reibelementkörper multifunktional ist.

Für die Wahl des Materials für das Reibelement oder den Reibelementkörper sowie die zur Herstellung eingesetzten Herstellungsverfahren gibt es ebenfalls vielfältige Möglichkeiten. Für eine Ausführungsform der Erfindung ist das mit dem Deckel verschwenkte Reibelement aus Metall, insbesondere Aluminium, hergestellt und als Frästeil ausgebildet. Möglich ist, dass dann das an dem Grundkörper gehaltene Reibelement bzw. der Reibelementkörper aus Kunststoff hergestellt ist, insbesondere aus POM, wobei in diesem Fall der Reibelementkörper auch als Spritzgussteil hergestellt sein kann. Das Material POM (Polyoxymethylen, auch Polyacetal, Polyformaldehyd oder bloß Acetal genannt) ist ein hochmolekularer thermoplastischer Kunststoff, der sich durch hohe Steifigkeit, niedrige Reibwerte und eine hohe Dimensionsstabilität und thermischen Stabilität auszeichnet. Die Materialwahl Kunststoff mit Metall für die Reibpaarung hat sich als vorteilhaft für die Dämpfungscharakteristik der derart gebildeten Dämpfungseinrichtung herausgestellt. Andererseits erübrigt sich unter Umständen für eine derartige Wahl der Reibmaterialien eine zusätzliche Schmierung, wie diese unter Umständen für einen rein metallischen Kontakt erforderlich sein kann. U. U. ist die Wahl des Materials Metall für das mit dem Deckel verschwenkte Reibelement bspw. dann vorteilhaft, wenn der Reibelementkörper, der dieses Reibelement bildet, integral auch ein Lagerauge ausbildet, was eine erhöhte Festigkeit erfordert.

Je nach Formgebung der Reibelemente und deren Anordnung an dem Grundkörper einerseits und dem Deckel andererseits ergeben sich beliebige Öffnungs- und Schließcharakteristika, welche vorzugsweise dadurch beeinflusst werden, für welchen Öffnungswinkel die Reibelemente miteinander in Kontakt sind und wie sich die Normalkraft zwischen den Reibelementen mit der Veränderung des Öffnungswinkels verändert. Für einen Vorschlag der Erfindung sind die Reibelemente bei einem Öffnungswinkel, welcher kleiner ist als ein konstruktiv vorgegebener Teilöffnungswinkel, beabstandet voneinander angeordnet, so dass zwischen diese keine Normalkraft wirkt. Für einen derartigen Öffnungswinkel kann somit die Bewegung des Deckels erfolgen, ohne dass durch die reibungsbedingte Dämpfungseinrichtung eine Beeinflussung der Öffnungs- und Schließcharakteristik erfolgt. Entspricht hingegen der Öffnungswinkel dem genannten Teilöffnungswinkel, kommen die Reibelemente erstmalig miteinander in Kontakt. Wird dann der Öffnungswinkel größer als der genannten Teilöffnungswinkel, werden die Reibelemente mit einer (konstanten oder veränderlichen) Normalkraft aneinandergepresst. Beispielsweise kann der genannte Teilöffnungswinkel im Bereich von 50 bis 80 %, insbesondere 55 bis 70 % oder 58 bis 64 % des maximalen Öffnungswinkels liegen. Um lediglich ein Beispiel zu nennen, kann der maximale Öffnungswinkel 75° ± 5° betragen, während der Teilöffnungswinkel, für welchen die Reibelemente erstmalig miteinander in Kontakt kommen, bei ca. 46° ± 3° liegen kann.

In bevorzugter Ausgestaltung vergrößert sich die Normalkraft zwischen den Reibelementen mit einer Annäherung an einen maximalen Öffnungswinkel und/oder mit einer Annäherung an einen Anschlag.

Bei der erfindungsgemäßen Dämpfungseinrichtung sind die Reibelemente unmittelbar oder mittelbar elastisch abgestützt, wobei unter Nutzung der elastischen Abstützung die Normalkraft erzeugt wird. Hierbei kann die erforderliche Elastizität von einem zusätzlichen, das Reibelement abstützenden Federelement bereitgestellt werden, bei welchem es sich bspw. um eine zwischen Reibelement und Deckel oder Reibelement und Grundkörper zwischengeordneten Elastomerkörper oder auch eine herkömmliche Feder handeln kann. Hierbei können/kann das mit dem Deckel verschwenkte Reibelement und/oder das an dem Grundkörper gehaltene Reibelement elastisch abgestützt sein. Für einen besonderen Vorschlag der Erfindung ist das Reibelement, welches mit dem Deckel verschwenkt wird, an einem elastischen Teilbereich des Deckels abgestützt. Hierbei kann die Materialstärke und Form sowie der Querschnitt des Deckels derart gewählt sein, dass der Deckel mit dem Teilbereich nachgeben kann, womit das Reibelement "einfedern" kann. Möglich ist, dass der Deckel im Bereich der Abstützung des Reibelements gezielt mit einer Materialschwächung, einem Einschnitt u. ä. ausgestattet ist, um die Einfederung des Reibelements zu ermöglichen. Hierbei ist die Elastizität der elastischen Abstützung des Reibelements angepasst an eine Neigung einer etwaigen Wendelfläche oder die Veränderung des Abstands einer Nockenfläche oder Innenfläche von der Schwenkachse, um die gewünschte Abhängigkeit der Normalkraft von dem Öffnungswinkel herbeizuführen.

Eine im Rahmen der Erfindung einsetzbare Dämpfungseinrichtung verfügt über zwei Reibelemente, die jeweils von einem Reibelementkörper ausgebildet sind. Hierbei weist ein Reibelementkörper einen Montagebereich für die Montage dieses Reibelementkörpers an einem Deckel der Laborzentrifuge auf. Um lediglich ein nicht beschränkendes Beispiel zu nennen, kann der Reibelementkörper Bohrungen oder Gewinde aufweisen, mittels welchen der Reibelementkörper mit dem Deckel verschraubt werden kann. Der andere Reibelementkörper weist einen Montagebereich auf, über welchen die Montage des Reibelementkörpers an einem Grundkörper der Laborzentrifuge möglich ist. Um diesbezüglich lediglich ein nicht beschränkendes Beispiel zu nennen, kann der Reibelementkörper eine Formgebung besitzen, welche in Richtung der Schwenkachse des Deckels in eine Ausnehmung eines Lagerbocks des Grundkörpers einsetzbar ist mit der Erzeugung eines Formschlusses zwischen dem Lagerbock und dem Reibelementkörper in Umfangsrichtung.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer räumlichen Ansicht schräg von links vorne eine Laborzentrifuge, wobei sich ein Deckel in einer Schließstellung befindet.
- **Fig. 2**: zeigt in teildemontiertem Zustand ein Detail II der Laborzentrifuge gemäß Fig. 1 in der Schließstellung des Deckels.
- **Fig. 3**: zeigt ein Detail entsprechend Fig. 2 bei Blickrichtung schräg von rechts vorne.
- **Fig. 4 bis 6**: zeigen Reibelementkörper einer Dämpfungseinrichtung für unterschiedliche Öffnungswinkel (Schließstellung Fig. 4, Teilöffnungswinkel Fig. 5 sowie maximaler Öffnungswinkel Fig. 6) und Blickrichtungen.
- **Fig. 7 bis 9**: zeigen eine weitere Ausgestaltung von Reibelementkörpern einer Dämpfungseinrichtung für unterschiedliche Öffnungswinkel (Schließstellung Fig. 7, Teilöffnungswinkel (Fig. 8) sowie maximaler Öffnungswinkel Fig. 9).
- **Fig. 10 bis 12**: zeigen eine weitere Ausgestaltung von Reibelementkörpern einer Dämpfungseinrichtung für unterschiedliche Öffnungswinkel (Schließstellung Fig. 10, Teilöffnungswinkel Fig. 11 sowie maximaler Öffnungswinkel Fig. 12).
- **Fig. 13 bis 15**: zeigen eine weitere Ausgestaltung von Reibelementkörpern einer Dämpfungseinrichtung für unterschiedliche Öffnungswinkel (Schließstellung Fig. 13, Teilöffnungswinkel Fig. 14 sowie maximaler Öffnungswinkel Fig. 15).
- **Fig. 16 bis 18**: zeigen eine weitere Ausgestaltung von Reibelementkörpern einer Dämpfungseinrichtung für unterschiedliche Öffnungswinkel (Schließstellung Fig. 16, Teilöffnungswinkel Fig. 17 sowie maximaler Öffnungswinkel Fig. 18).

### FIGURENBESCHREIBUNG

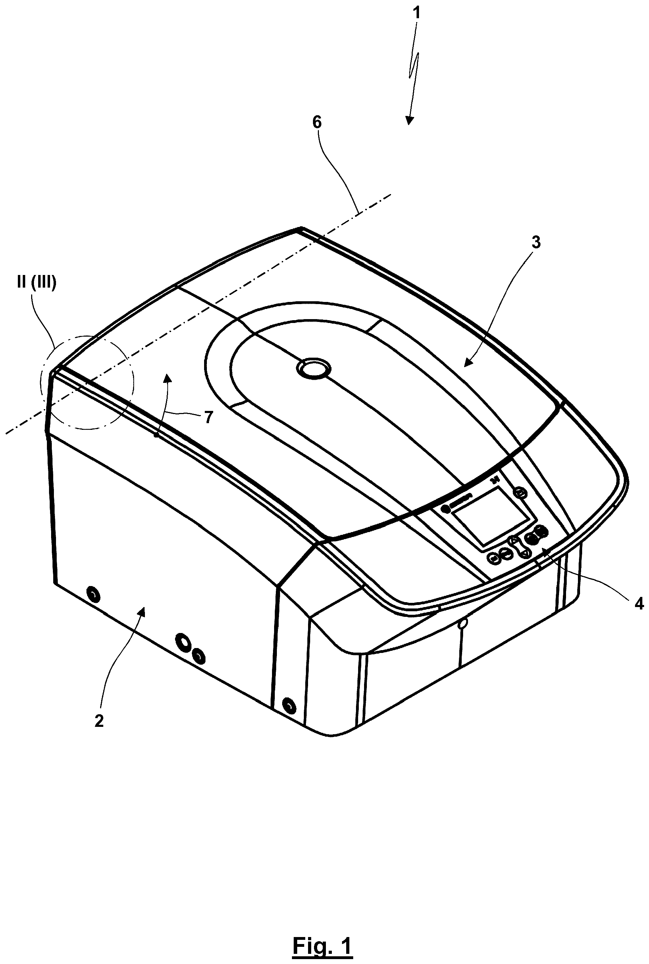

**Fig. 1** zeigt eine Laborzentrifuge 1, die mit einem Grundkörper 2 und einem Deckel 3 gebildet ist. In an sich bekannter Weise verfügt der Grundkörper 2 über ein hier im Bereich seiner Oberseite angeordnetes Bedien- und Anzeigefeld 4, einen mit einem Antriebszapfen für einen Zentrifugenrotor verbundenen Antrieb, elektrische Leistungsanschlüsse, ein Be- und Entlüftungssystem, eine Heizeinrichtung, eine Schnittstelle zur Verbindung mit weiteren Einrichtungen u. ä. Der Grundkörper 2 bildet einen nach oben offenen Innenraum aus, in welchen die Produkte, ein Probenbehälter und/oder der Zentrifugenbehälter einbringbar ist, wo diese mit einem Rotor gekoppelt werden. Der Innenraum ist nach oben durch den Deckel 3 verschlossen. Für das hier dargestellte Ausführungsbeispiel erstreckt sich der Deckel 3 im Bereich der Oberseite der Laborzentrifuge 1 lediglich hinter dem Bedien- und Anzeigefeld 4. Fig. 1 zeigt den Deckel 3 in seiner Schließstellung. Der Deckel 3 ist im hinteren Endbereich verschwenkbar um eine horizontal orientierte Schwenkachse 6 gegenüber dem Grundkörper 2 gelagert. Mit einer Verschwenkung des Deckels 3 um die Schwenkachse 6 aus der Schließstellung in Fig. 1, in welcher der Deckel 3 ungefähr horizontal oder leicht nach vorne geneigt ist, nach oben kann unter Erhöhung eines Öffnungswinkels 7 der Innenraum der Laborzentrifuge 1 zugänglich gemacht werden.

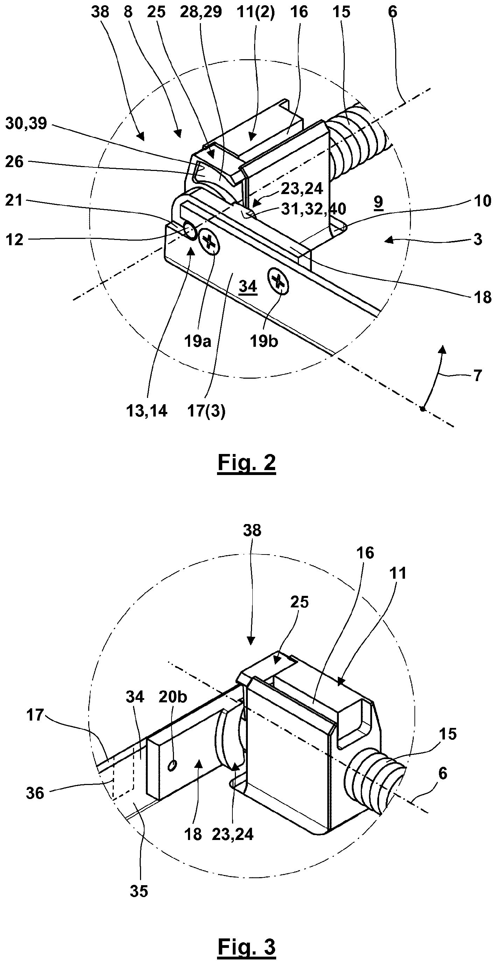

**Fig. 2** zeigt in dem Detail II gemäß Fig. 1 den Lagerbereich 8 für die verschwenkbare Lagerung des Deckels 3 gegenüber dem Grundkörper 2. Der Deckel 3 ist schalenartig mit einer oberen Schale und einer unteren Schale ausgebildet, zwischen denen ein Innenraum gebildet ist. In Fig. 2 der Deckel 3 teildemontiert dargestellt ist unter Entfernung der oberen Schale, so dass lediglich ein von der unteren Schale gebildetes unteres Deckelteil 9 zu erkennen ist. Das Deckelteil 9 verfügt über eine hier rechteckige Ausnehmung 10, durch welche sich vertikal nach oben ein an dem Grundkörper 2 gehaltener Lagerbock 11 erstreckt. Der Lagerbock 11 lagert einen Lagerzapfen 12, welcher mit einem mit dem Deckel 3 ausgebildeten oder hieran gehaltenen Lagerauge 13 ein Schwenklager 14 bildet. Möglich ist, dass der Lagerzapfen 12 Teil einer Lagerwelle ist, welche auch auf der anderen Seite aus dem Lagerbock 11 herausragt und sich hier durch eine spiralförmige Torsionsfeder 15 erstreckt, um diese zu führen. Ein Federfußpunkt der Torsionsfeder 15 ist formschlüssig in Umfangsrichtung um die Schwenkachse 6 aufgenommen in eine Ausnehmung oder Nut 16 des Lagerbocks 11. Der andere Federfußpunkt der Torsionsfeder 15 ist an dem Deckel befestigt oder in Umfangsrichtung um die Schwenkachse 6 abgestützt. Möglich ist, dass in der Schließstellung des Deckels 3 die Torsionsfeder 15 derart vorgespannt ist, dass mit dem Öffnen eines Deckelschlosses der Deckel 3 automatisch in eine Öffnungsstellung springt, wobei in der Öffnungsstellung das durch das Eigengewicht des Deckels 3, welches exzentrisch zu der Schwenkachse 6 im Schwerpunkt des Deckels 3 wirkt, durch die Torsionsfeder 15 abgestützt ist.

Der Deckel 3 verfügt im lateralen Randbereich über eine Seitenwandung oder Strebe 17, deren Längsachse radial zur Schwenkachse 6 orientiert ist. Für das dargestellte Ausführungsbeispiel ist die Seitenwandung oder Strebe 17 platten- oder bandartig ausgebildet mit ihrer Haupterstreckungsebene vertikal zur Schwenkachse 6. An dem Deckel 3, hier an der Seitenwandung oder Strebe 17, ist ein Reibelementkörper 18 montiert und befestigt, was für das dargestellte Ausführungsbeispiel über Schrauben 19a, 19b erfolgt, welche sich parallel zu der Schwenkachse 6 durch Bohrungen der Seitenwandung oder Strebe 17 erstrecken und in Gewindebohrungen 20a, 20b des Reibelementkörpers 18 eingeschraubt sind.

Der Reibelementkörper 18 bildet gemeinsam mit der Seitenwandung oder Strebe 17 das Lagerauge 13 für den Lagerzapfen 12, wobei durch Lösen der Schrauben 19 ein Öffnen des Lagerauges 13 ermöglicht ist. Zu diesem Zweck verfügt die Seitenwandung oder Strebe 17 in dem dargestellten Endbereich über einen einseitig offenen Lagerschlitz 21. Mit der Montage wird der Lagerzapfen 12 von dem offenen Ende in den Lagerschlitz 21 eingeführt, bis dieser mit seiner Mantelfläche an einem halbzylindrischen Ende des Lagerschlitzes 21 anliegt. Der Reibelementkörper 18 verfügt ebenfalls über einen Lagerschlitz 22, welcher in montiertem Zustand des Reibelementkörpers 18 an der Seitenwandung oder Strebe 17 um 90° gegenüber dem Lagerschlitz 21 geneigt ist. Somit blockiert eine seitliche Begrenzung 5 des Lagerschlitzes 22 des Reibelementkörpers 18 den Austritt des Lagerzapfens 12 aus dem Lagerschlitz 21 der Seitenwandung oder Strebe 17. Die Konturgebung und Wahl der Abmessungen der Lagerschlitze 21, 22 ist derart gewählt, dass eine leichtgängige Verschwenkung des Deckels 3 mit der Seitenwandung oder Strebe 17 und dem Reibelementkörper 18 gegenüber dem Lagerzapfen 12 möglich ist. Für den Fall, dass der Lagerzapfen 12 drehbar in dem Lagerbock 11 gelagert ist, kann der Lagerzapfen 12 auch zwischen der Seitenwandung oder Strebe 17 und dem Reibelementkörper 18 verspannt und damit fixiert sein.

Auf der dem Lagerbock 11 zugewandten Seite bildet der Reibelementkörper 18 ein Reibelement 23 aus. Für das in **Fig. 2 bis 6** dargestellte Ausführungsbeispiel verfügt das Reibelement 23 über eine Wendelfläche 24. Die Wendelfläche 24 verläuft wendelförmig um die Schwenkachse 6, so dass sich der Abstand der Wendelfläche 24 von dem Lagerbock 11 in Umfangsrichtung verändert. In einer Projektion der Wendelfläche 24 auf eine Ebene, die quer zur Schwenkachse 6 orientiert ist, ist die Wendelfläche 24 kreisringsegmentförmig ausgebildet, wobei der Umfangswinkel des Kreisringsegments kleiner als 90°, insbesondere kleiner als 70° ist.

An dem Lagerbock 11 ist ein Reibelementkörper 25 befestigt, welcher ein weiteres Reibelement 26 bildet, welches an dem Grundkörper 2 gehalten ist. Für das dargestellte Ausführungsbeispiel besitzt der Lagerbock 11 eine Ausnehmung, in welche in Richtung der Schwenkachse 6 ein Fortsatz 50 des Reibelementkörpers 25 einsetzbar ist und in welcher der Reibelementkörper 25 über den Fortsatz formschlüssig in Umfangsrichtung fixiert ist. Der Reibelementkörper 25 verfügt über eine Bohrung 27, durch welche sich in montiertem Zustand der Lagerzapfen 12 erstreckt. Auf der dem Reibelement 23 zugewandten Seite weist der Reibelementkörper 25 eine Nut 28 auf. Der Boden der Nut 28 ist nicht eben ausgebildet und liegt nicht in einer Ebene, welche quer zur Schwenkachse 6 orientiert ist. Vielmehr ist der Boden der Nut gegenüber dieser Ebene geneigt, wobei der Neigungswinkel der Neigung der Wendelfläche 24 entspricht. In einer Projektion der Nut 28 in eine Ebene, die quer zur Schwenkachse 6 orientiert ist, ist die Nut 28 kreisringsegmentförmig ausgebildet, wobei der Umfangswinkel des Kreisringsegments kleiner als 90°, insbesondere kleiner als 70° ist. Der Abstand der Nut 28 von der Schwenkachse 6 und deren Breite ist so gewählt, dass das Reibelement 23 mit einem radialen inneren und äußeren Spiel in die Nut 28 eintreten kann mit einer Vergrößerung des Öffnungswinkels 7. Der Boden der Nut 28 bildet eine Wendelfläche 29 aus, deren Steigung der Steigung der Wendelfläche 24 entspricht. Die Nut 28 ist einseitig offen, wobei mit Vergrößerung des Öffnungswinkels 7 das Reibelement 23 über die Öffnung in die Nut 28 eintreten kann. In dem gegenüberliegenden Endbereich ist die Nut 28 unter Bildung eines Anschlags 30 in Form einer Anschlagfläche geschlossen. Für den maximalen Öffnungswinkel 37 kommt eine Stirnseite 31 des Reibelements 23, welche eine Anschlagfläche 40 eines Anschlags 32 bildet, zur Anlage an den Anschlag 30.

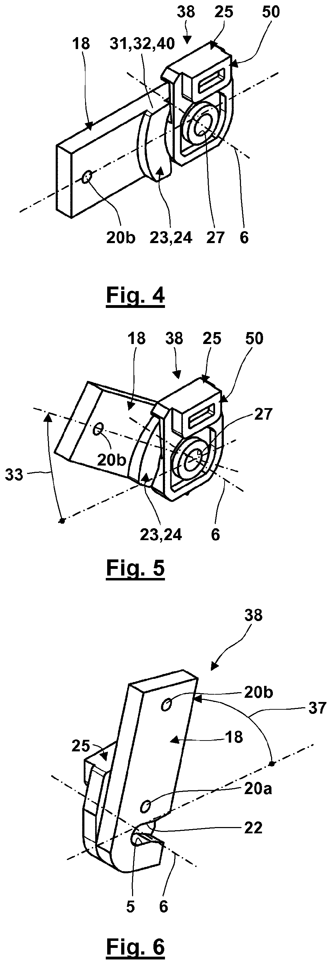

Befindet sich der Deckel 3 gemäß Fig. 1 bis 4 in seiner Schließstellung, ist das Reibelement 23 in Umfangsrichtung um die Schwenkachse 6 gesehen vor der Nut 28 angeordnet. Mit Bewegung des Deckels 3 und somit der Seitenwandung oder Strebe 17 und des Reibelementkörpers 18 in Öffnungsrichtung unter Erhöhung des Öffnungswinkels 7 nähert sich das Reibelement 23 der Nut 28 an und tritt schließlich auch in die Nut 28 ein. Während dieser Bewegung ist zunächst kein Kontakt zwischen den Wendelflächen 24, 29 vorhanden. Erst mit dem Erreichen eines Teilöffnungswinkels 33 kommt die Wendelfläche 24 zur Anlage an die Wendelfläche 29 (vgl. Fig. 5). Eine weitere Erhöhung des Öffnungswinkels 7 führt angesichts der Neigung der Wendelflächen 24, 29 und der Relativbewegung derselben zu einer Erhöhung der Anpresskraft zwischen den Wendelflächen 24, 29, wobei mindestens eine Abstützung eines Reibelements 23, 26 elastisch ist. Für das dargestellte Ausführungsbeispiel ist im Bereich der Seitenwandung oder Strebe 17 ein elastischer Teilbereich 34 gebildet, welcher ermöglicht, dass die Wendelfläche 24 bei Beaufschlagung zurückweichen kann, wobei mit der elastischen Beaufschlagung die Normalkraft zwischen Wendelfläche 24 und Wendelfläche 29 erhöht wird. Unter Umständen ist die Seitenwandung oder Strebe 17 gezielt mit einem geschwächten Materialbereich 35, bspw. durch einen in Fig. 3 gestrichelt dargestellten Einschnitt 36, ausgestattet. Fig. 6 zeigt den maximalen Öffnungswinkel 37, für welche die Normalkraft zwischen den Wendelflächen 24, 29 maximal ist. Mit Erreichen des maximalen Öffnungswinkels 37 ist das Reibelement 23 vollständig in die Nut 28 eingetreten, womit der von dem Reibelement 23 gebildete Anschlag 32 zur Anlage kommt an den von der Nut 28 ausgebildeten endseitigen Anschlag 30, wodurch der maximale Öffnungswinkel 37 vorgegeben wird. Für die Erhöhung des Öffnungswinkels 7 von dem Teilöffnungswinkel 33 zum maximalen Öffnungswinkel 37 erhöht sich sukzessive die zwischen den Wendelflächen 24, 29 wirkende Normalkraft. Da mit Erhöhung des Öffnungswinkels 7 das Reibelement 23 immer weiter in die Nut 28 eintritt, erhöht sich auch die zwischen den Wendelflächen 24, 29 ausgebildete Kontakt- und Reibfläche. Die Reibelemente 23, 26 bilden eine auf Reibung basierende Dämpfungseinrichtung 38.

Ein Dämpfungsmoment, welches auf den Deckel 3 von der Dämpfungseinrichtung 38 infolge der vorzugsweise trockenen Reibung ausgeübt wird, ist vorzugsweise größer als ein Dämpfungsmoment infolge einer anderen Festkörperreibung, wie diese bspw. im Bereich der Lager und unter Umständen zwischen unterschiedlichen Windungen der Torsionsfeder 15 auftreten kann. Vorzugsweise ist ein derartiges Dämpfungsmoment der Dämpfungseinrichtung 38 um den Faktor 5 oder 10 größer als die anderen, auf trockener Reibung basierenden Reibungen bei der Bewegung des Deckels 3 gegenüber dem Grundkörper 2.

Die Anschläge 30, 32 werden für das dargestellte Ausführungsbeispiel von Anschlagflächen 39, 40 gebildet. Hierbei ist die Anschlagfläche 39 des Anschlags 30 von der seitlichen Begrenzung der Nut 28 gebildet, welche unmittelbar, insbesondere mit dem Übergang über einen Knick, an die Wendelfläche 29 anschließt. Hingegen ist die Anschlagfläche 40 des Anschlags 32 gebildet von der Stirnseite 31, welche unmittelbar, hier ebenfalls unter Bildung eines Knicks, übergeht in die Wendelfläche 24.

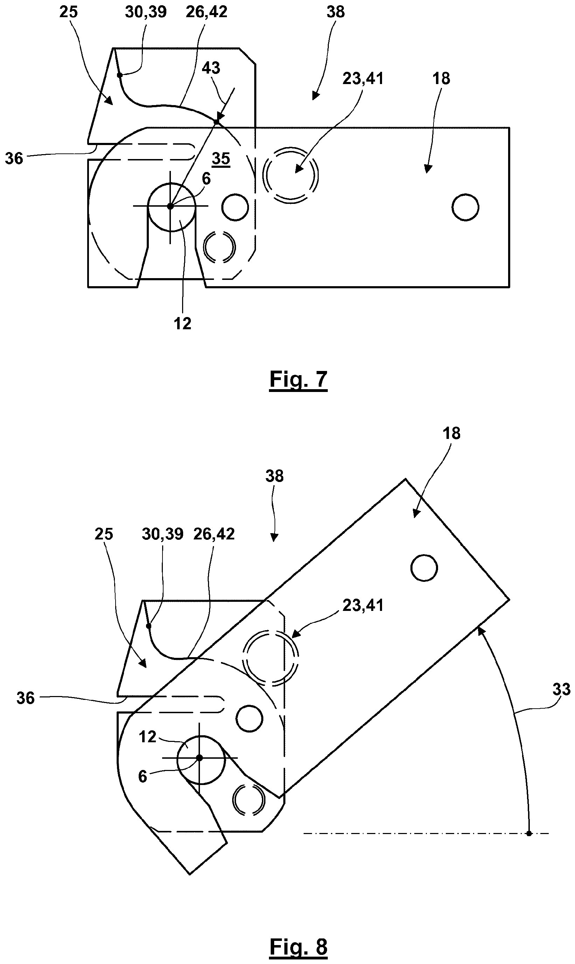

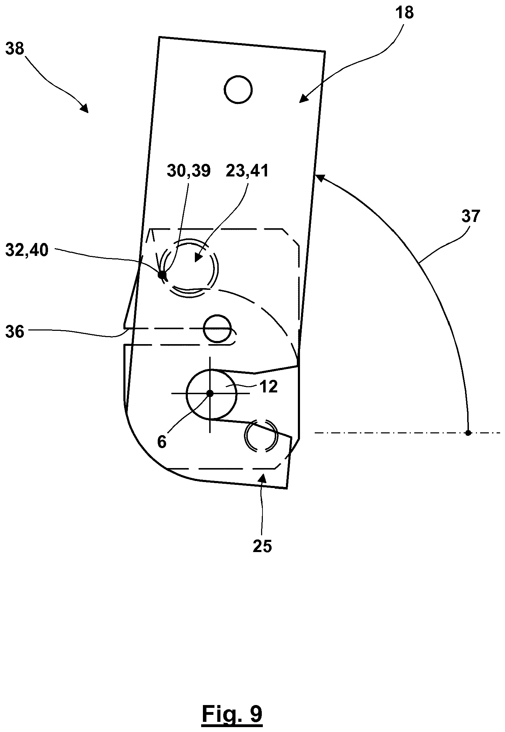

Für das Ausführungsbeispiel gemäß Fig. 2 bis 6 ist die Normalkraft im Wesentlichen parallel zur Schwenkachse 6 orientiert, wobei sich infolge der Steigung der Wendelflächen 24, 29 eine vertikal hierzu orientierte Komponente der Normalkraft ergibt. Hingegen zeigen die Fig. 7 bis 9 eine Ausführungsform der Dämpfungseinrichtung 38, bei welcher die Normalkraft vorrangig radial zur Schwenkachse 6 orientiert ist und in einer Ebene liegt, welche quer zur Schwenkachse 6 orientiert ist. In den Fig. 7 bis 9 ist die Dämpfungseinrichtung 38 lediglich mit den beiden Reibelementkörpern 18, 25 dargestellt bei Blickrichtung in Richtung der Schwenkachse 6, so dass die Schwenkachse 6 hier jeweils vertikal zur Zeichenebene orientiert ist. In diesem Fall trägt der Reibelementkörper 18 ein Reibelement 23, welcher als parallel zur Schwenkachse 6 orientierter, nach innen hervorstehender Zapfen 41 ausgebildet ist, welcher in den Figuren gestrichelt dargestellt ist. Das Reibelement 26 des Reibelementkörpers 25 ist in diesem Fall mit einer Nockenfläche 42 ausgebildet, deren Abstand 43 sich von der Schwenkachse 6 in Umfangsrichtung verändert.

In der Schließstellung gemäß Fig. 7 bildet das Reibelement 23 keinen Kontakt mit der Nockenfläche 42 aus, so dass die Dämpfungseinrichtung 38 bei einer Erhöhung des Öffnungswinkels 7 zunächst keine Reibkraft erzeugt. Fig. 8 zeigt die Dämpfungseinrichtung 38 für das Erreichen des Teilöffnungswinkels 33, für welchen das Reibelement 23 erstmals in Kontakt mit der Nockenfläche 42 kommt. Eine weitere Erhöhung des Öffnungswinkels 7 führt angesichts der Vergrößerung des Abstands 43 der Nockenfläche 42 von der Schwenkachse 6 dazu, dass die Normalkraft zwischen dem Reibelement 23 und der Nockenfläche 42 ansteigt, womit dann zunehmend eine dämpfende Reibkraft durch die Dämpfungseinrichtung 38 herbeigeführt wird. Es versteht sich, dass beliebige Verläufe des Abstands 43 der Nockenfläche 42 von der Schwenkachse 6 möglich sind, womit dann auch ein beliebiger Verlauf der die Dämpfung bereitstellenden Reibkraft in Abhängigkeit von dem Öffnungswinkel 7 herbeigeführt werden kann. Die Nockenfläche 42 geht unmittelbar, hier über eine Abrundung, deren Krümmung vorzugsweise der Krümmung der Mantelfläche des Zapfens 41 entspricht, über in die Anschlagfläche 39 zur Bildung des Anschlags 30.

In Fig. 7 bis 9 ist zu erkennen, dass für dieses Ausführungsbeispiel der Reibelementkörper 25 über einen geschwächten Materialbereich 35 infolge eines Einschnitts 36 verfügt, so dass mit Erhöhung der Normalkraft zwischen dem Reibelement 23 und der Nockenfläche 42 die Nockenfläche 42 elastisch nachgeben kann.

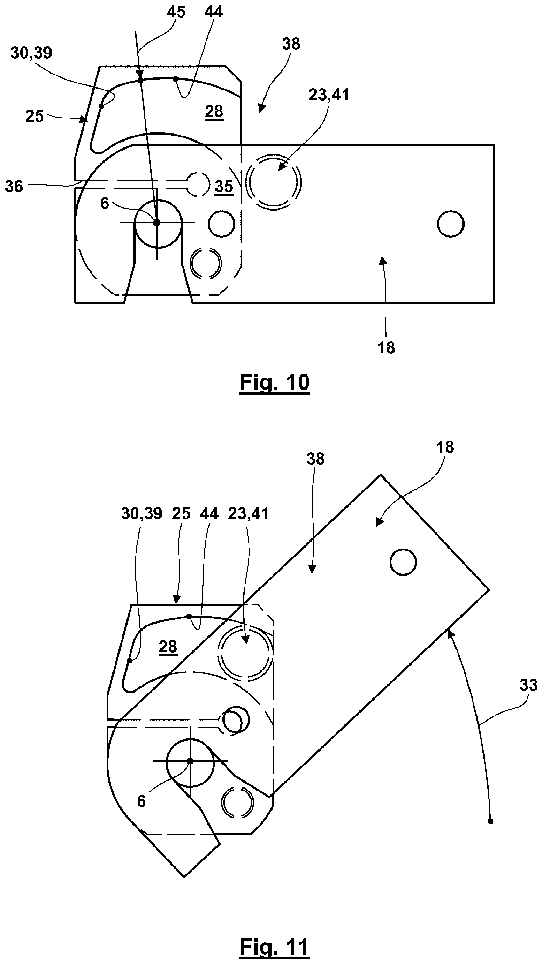

Gemäß den Fig. 7 bis 9 wurde der Reibkontakt zwischen dem Reibelement 23 und einer Nockenfläche 42 radial innenliegend von dem Reibelement 23 hinsichtlich der Schwenkachse 6 ausgebildet. Hingegen zeigen die **Fig. 10 bis 12** eine Ausführungsform, bei welcher der Reibkontakt hinsichtlich der Schwenkachse 6 radial außenliegend an dem Reibelement 23 ausgebildet wird. Zu diesem Zweck verfügt der Reibelementkörper 25 über eine Innenfläche 44, deren Abstand 45 von der Schwenkachse 6 sich in Umfangsrichtung kontinuierlich ändert.

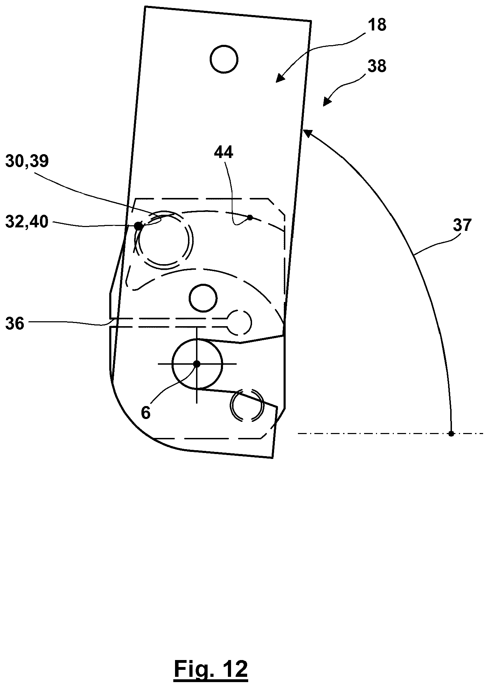

In der Schließstellung gemäß Fig. 10 bildet das auch hier zapfenförmige Reibelement 23 noch keinen Kontakt mit der Innenfläche 44 aus. Mit Erreichen des Teilöffnungswinkels 33 gemäß Fig. 11 kommt das Reibelement 23 radial außenliegend in Kontakt mit der Innenfläche 44. Die weitere Erhöhung des Öffnungswinkels 7 führt zu einer zunehmenden, hier kontinuierlichen Erhöhung der Normalkraft zwischen Reibelement 23 und Innenfläche 44, womit dann eine zunehmende dämpfende Reibkraft herbeigeführt wird. In der maximalen Öffnungsstellung 37 gemäß Fig. 12 sind die Normalkraft und die Reibkraft maximal. Der Zapfen 41, welcher hier eine Anschlagfläche 40 zwecks Bereitstellung des Anschlags 32 ausbildet, liegt dann an an einer Anschlagfläche 39 des Reibelementkörpers 25, welche unmittelbar an die Innenfläche 44, insbesondere mit einer Abrundung mit einem Radius entsprechend dem Radius des Zapfens 41, anschließt. Für das dargestellte Ausführungsbeispiel ist die Innenfläche 44 von einer seitlichen Begrenzung einer Nut 28 ausgebildet, ohne dass dies zwingend der Fall ist. Auch hier ist der Reibelementkörper 25 gezielt mit einem geschwächten Materialbereich 35 infolge eines Einschnitts 36 ausgestattet.

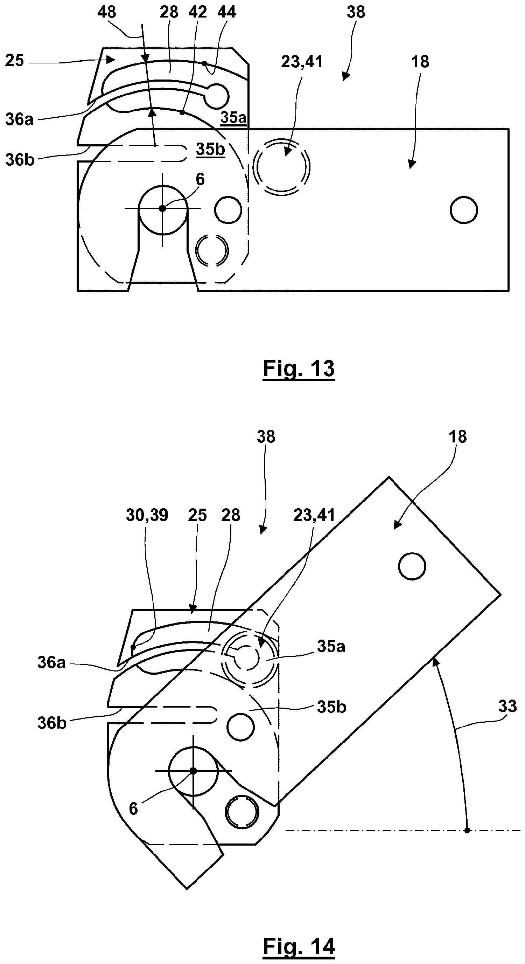

Für das in den **Fig. 13 bis 15** dargestellte Ausführungsbeispiel der Dämpfungseinrichtung 38 ist die Nut 28 mit einer sich in Öffnungsrichtung verjüngender Nutbreite 45 ausgebildet, wobei die Nutbreite 48 infolge der Verjüngung kleiner wird als die Abmessung des Reibelements 23 in dem Bereich, mit welchem das Reibelement 23 in die Nut 28 eintritt. Anders gesagt bildet die sich verjüngende Nut 28 mit der radial innenliegenden Begrenzung der Nut 28 eine Nockenfläche 42 aus, während die radial außenliegende Begrenzung der Nut 28 eine Innenfläche 44 ausbildet. Der Reibelementkörper 25 ist mit einem geschwächten elastisch verformbaren Materialbereich 35 ausgebildet, welcher sich infolge eines Einschnitts 36 ergibt.

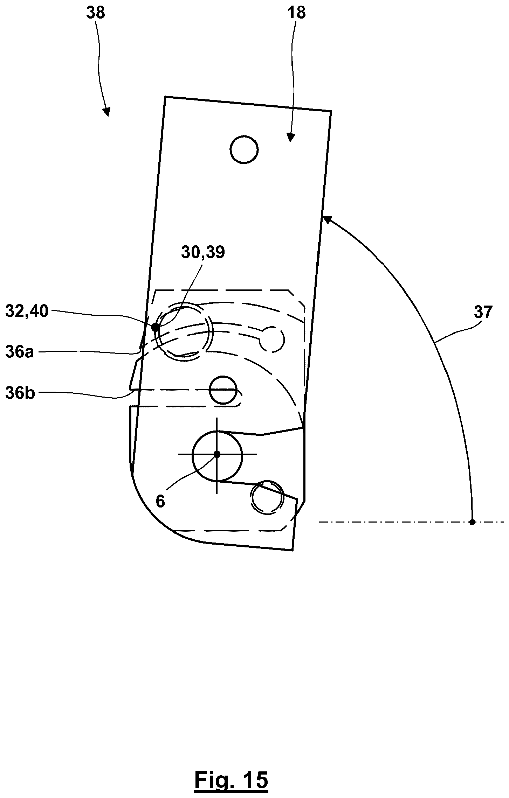

Für die Schließstellung des Deckels 3 gemäß Fig. 13 bildet das Reibelement 23 keinen Kontakt mit den seitlichen Begrenzungen der Nut 28, also mit der Nockenfläche 42 und der Innenfläche 44, aus. Mit dem Erreichen des Teilöffnungswinkels 33 gemäß Fig. 14 kommt das Reibelement 23 in Kontakt mit der Nockenfläche 42 und/oder der Innenfläche 44. Eine weitere Erhöhung des Öffnungswinkels 7 führt dazu, dass infolge eines "Einklemmens" des Reibelements 23 in der sich verjüngenden Nut 28 die Normalkraft des Reibelements 23 einerseits mit der Nockenfläche 42 und andererseits mit der Innenfläche 44 größer wird, womit auch die dämpfende Reibkraft erhöht wird. Infolge des geschwächten elastischen Materialbereichs 35 kann hierbei die Nut 28 "auffedern". Alternativ oder zusätzlich kann das Reibelement 23 elastisch ausgebildet sein. Mit Erreichen des maximalen Öffnungswinkels 37 gemäß Fig. 15 kommt die von dem Reibelement 23 gebildete Anschlagfläche 40 zur Anlage an die von dem geschlossenen Endbereich der Nut 28 gebildete Anschlagfläche 39. Durchaus möglich ist, dass mehrere Einschnitte 36a, 36b zur Bereitstellung mehrerer geschwächter elastischer Materialbereiche 35a, 35b vorhanden sind.

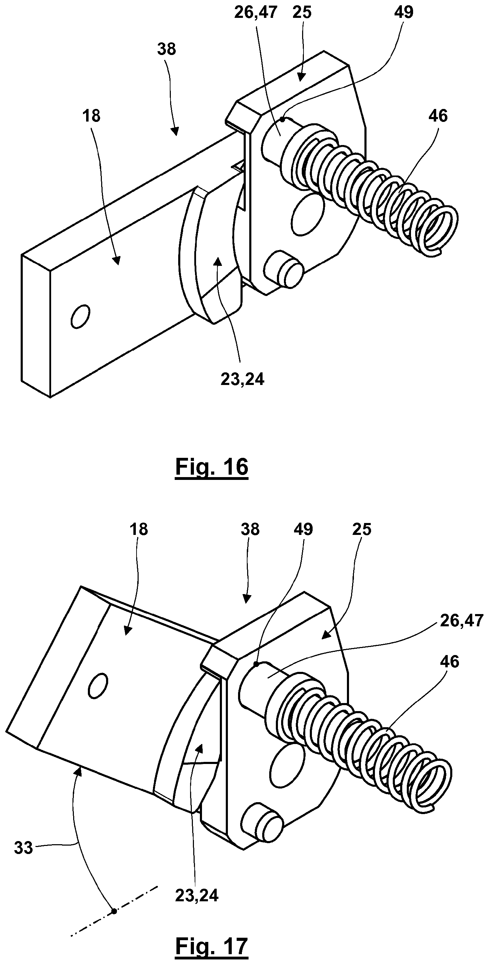

In den **Fig. 16 bis 18** ist eine weitere Ausführungsform einer Dämpfungseinrichtung 38 dargestellt, bei welcher der mit dem Deckel verschwenkte Reibelementkörper 18 entsprechend dem Ausführungsbeispiel gemäß den Fig. 2 bis 6 ausgebildet ist. In diesem Fall wird aber die Elastizität zur Erzeugung der Normalkraft zwischen den Reibelementen 23, 26 nicht (ausschließlich) über die Elastizität des Deckels 3, insbesondere der Seitenwandung oder Strebe 17 bereitgestellt. Vielmehr findet in dem Reibelementkörper 25 ein Reibelement 26 Einsatz, welches unter Beaufschlagung durch eine Feder 46 parallel zu der Schwenkachse 6 verschieblich gegenüber dem Reibelementkörper 25 geführt ist. Für das dargestellte Ausführungsbeispiel handelt es sich bei dem Reibelement 26 um einen Reibstift 47, der parallel zu der Schwenkachse 6 verschieblich in einer Bohrung 49 des Reibelementkörpers 25 geführt ist. Hierbei kann die der Wendelfläche 24 des Reibelementkörpers 18 zugewandte Stirnseite des Reibstifts 47 entsprechend der Steigung der Wendelfläche 24 abgeschrägt sein, abgerundet sein u. ä.

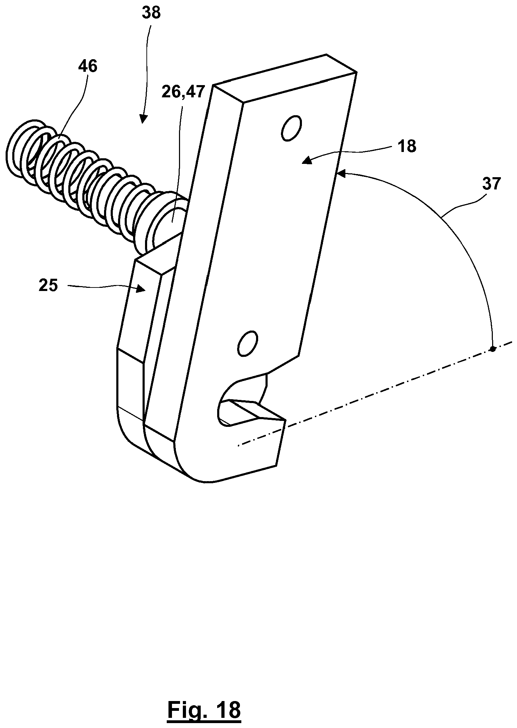

In der in Fig. 16 dargestellten Schließstellung des Deckels 3 befindet sich die Stirnseite des Reibstifts 47 außer Kontakt mit der Wendelfläche 24. Ein derartiger Kontakt wird erst mit Erreichen des Teilöffnungswinkels 33 gemäß Fig. 17 hergestellt. Mit weiterer Erhöhung des Öffnungswinkels 7 drückt die Wendelfläche 24 des Reibelements 23 zunehmend den Reibstift 47 gegen die Beaufschlagung durch die Feder 46, womit in Abhängigkeit von der Federsteifigkeit der Feder 46 und der Neigung der Wendelfläche 24 die Normalkraft zwischen dem Reibstift 47 und der Wendelfläche 24 erhöht wird und damit auch die Reibung ansteigt. Schließlich ist gemäß Fig. 18 der maximale Öffnungswinkel 37 erreicht. Unter Umständen wird für diese ein Anschlag nicht von den Reibelementen 23, 26 bereitgestellt. Möglich ist aber auch, dass eine Mantelfläche des Reibstifts 47 für den maximalen Öffnungswinkel 37 zur Anlage kommt an einen entsprechenden, von dem Reibelementkörper 18 oder der Wendelfläche 24 ausgebildeten Anschlag. U. U. wird ein Anschlag auch entsprechend der Ausführungsform gemäß Fig. 6 bereitgestellt.

Es versteht sich, dass die Wendelfläche 24 des Reibelements 23 nicht zwingend eine konstante Steigung besitzen kann. Vielmehr kann die Wendelfläche auch eine variierende Steigung, Knicke oder Sprünge besitzen, wodurch eine Beeinflussung der Reibungsverhältnisse ermöglicht ist.

Für die dargestellten Ausführungsbeispiele war die auf Reibung basierende Dämpfungseinrichtung 38 immer in dem Lagerbereich 8 des Deckels 3 an dem Grundkörper 2 angeordnet. Durchaus möglich ist im Rahmen der Erfindung aber auch, dass die Dämpfungseinrichtung 38 abseits der Lagerbereiche 8 des Deckels 3 an dem Grundkörper 2 angeordnet sein kann.

Vorzugsweise ist der Lagerbock 11 so ausgebildet, dass dieser sowohl auf der rechten Seite als auch auf der linken Seite angeordnet werden kann, womit die Zahl der Gleichteile erhöht wird. Vorzugsweise ist insbesondere die Ausnehmung zur Aufnahme des Reibelementkörpers 25 auf beiden Seiten des Lagerbocks 11 angeordnet.

Möglich ist, dass der maximale Öffnungswinkel 37 des Deckels 3 ausgehend von der Schließstellung 75° ± 5° beträgt. Vorzugsweise ist der Teilöffnungswinkel 33, für welchen erstmalig die beiden Reibelemente 23, 26 miteinander in Kontakt kommen, bei einem Öffnungswinkel 7 von 46° ± 3° erreicht, wobei auch möglich ist, dass der Teilöffnungswinkel toleranzbedingt für unterschiedliche Laborzentrifugen 1 schwankt.

### BEZUGSZEICHENLISTE

- 1: Laborzentrifuge
- 2: Grundkörper
- 3: Deckel
- 4: Bedien- und Anzeigefeld
- 5: Begrenzung
- 6: Schwenkachse
- 7: Öffnungswinkel
- 8: Lagerbereich
- 9: Deckelbereich
- 10: Ausnehmung
- 11: Lagerbock
- 12: Lagerzapfen
- 13: Lagerauge
- 14: Schwenklager
- 15: Torsionsfeder
- 16: Ausnehmung, Nut
- 17: Seitenwandung, Strebe
- 18: Reibelementkörper
- 19: Schraube
- 20: Gewindebohrung
- 21: Lagerschlitz
- 22: Lagerschlitz
- 23: Reibelement
- 24: Wendelfläche
- 25: Reibelementkörper
- 26: Reibelement
- 27: Bohrung
- 28: Nut
- 29: Wendelfläche
- 30: Anschlag
- 31: Stirnseite
- 32: Anschlag
- 33: Teilöffnungswinkel
- 34: elastischer Teilbereich
- 35: elastischer geschwächter Materialbereich
- 36: Einschnitt
- 37: maximaler Öffnungswinkel
- 38: Dämpfungseinrichtung
- 39: Anschlagfläche
- 40: Anschlagfläche
- 41: Zapfen
- 42: Nockenfläche
- 43: Abstand
- 44: Innenfläche
- 45: Nutbreite
- 46: Feder
- 47: Reibstift
- 48: Nutbreite
- 49: Bohrung
- 50: Fortsatz

## Patentansprüche

1. Laborzentrifuge (1) mit
a) einem Grundkörper (2),
b) einem verschwenkbar um eine Schwenkachse (6) an dem Grundkörper (2) gelagerten Deckel (3) und
c) einer Dämpfungseinrichtung (38), welche die Schwenkbewegung des Deckels (3) gegenüber dem Grundkörper (2) dämpft,
**dadurch gekennzeichnet, dass**
d) die Dämpfungseinrichtung (38) mit einem an dem Grundkörper (2) gehaltenen Reibelement (26) und einem mit dem Deckel (3) verschwenkten Reibelement (23) gebildet ist, wobei
da) die Reibelemente (23, 26) über eine Normalkraft aneinandergepresst werden, so dass die Reibelemente (23, 26) eine eine Dämpfung bewirkende Reibkraft erzeugen, und
db) die Normalkraft von dem Öffnungswinkel (7) des Deckels (3) gegenüber dem Grundkörper (2) abhängig ist.

2. Laborzentrifuge (1) nach Anspruch 1, **dadurch gekennzeichnet, dass** die Normalkraft parallel zu der Schwenkachse (6) orientiert ist.

3. Laborzentrifuge (1) nach Anspruch 1, **dadurch gekennzeichnet, dass** die Normalkraft in einer Ebene wirkt, welche quer zu der Schwenkachse (6) orientiert ist.

4. Laborzentrifuge (1) nach Anspruch 1 oder 2, **dadurch gekennzeichnet, dass** mindestens ein Reibelement (23; 26) mit einer sich um die Schwenkachse (6) erstreckenden Wendelfläche (24; 29) gebildet ist.

5. Laborzentrifuge (1) nach Anspruch 4, **dadurch gekennzeichnet, dass** die Wendelfläche (24; 29) eine Steigung von 5 bis 15 mm, insbesondere von 8 bis 12 mm, aufweist.

6. Laborzentrifuge (1) nach Anspruch 1 oder 2, **dadurch gekennzeichnet, dass** mindestens ein Reibelement (23; 26) mit einer sich um die Schwenkachse (6) erstreckenden Nockenfläche (42) oder Innenfläche (44) gebildet ist, deren Abstand (43; 45) von der Schwenkachse (6) sich in Umfangsrichtung um die Schwenkachse (6) verändert.

7. Laborzentrifuge (1) nach einem der vorhergehenden Ansprüche, **dadurch gekennzeichnet, dass** ein Anschlag (30; 32) zur Begrenzung der Schwenkbewegung des Deckels (3) vorhanden ist.

8. Laborzentrifuge (1) nach Anspruch 7 in Rückbeziehung auf einen der Ansprüche 4 bis 6, **dadurch gekennzeichnet, dass** der Anschlag (30; 32) mit einer Anschlagfläche (39; 40) gebildet ist, welche unmittelbar an die Nockenfläche (42), Innenfläche (44) und/oder Wendelfläche (24; 29) anschließt.

9. Laborzentrifuge (1) nach einem der vorhergehenden Ansprüche, **dadurch gekennzeichnet, dass** der Anschlag (30; 32) integral mit dem Reibelement (23; 26) ausgebildet ist.

10. Laborzentrifuge (1) nach einem der vorhergehenden Ansprüche, **dadurch gekennzeichnet, dass** das an dem Grundkörper (2) gehaltene Reibelement (26) von einem Reibelementkörper (25) gebildet ist, welcher an einem Lagerbock (11) des Grundkörpers (2) montiert ist.

11. Laborzentrifuge (1) nach einem der vorhergehenden Ansprüche, **dadurch gekennzeichnet, dass** das mit dem Deckel (3) verschwenkte Reibelement (23) von einem Reibelementkörper (18) gebildet ist, welcher an dem Deckel (3) montiert ist.

12. Laborzentrifuge (1) nach Anspruch 11, **dadurch gekennzeichnet, dass** mit dem Reibelementkörper (18), der das mit dem Deckel (3) verschwenkte Reibelement (23) bildet, ein Lagerauge (13) gebildet ist.

13. Laborzentrifuge (1) nach einem der Ansprüche 10 bis 12, **dadurch gekennzeichnet, dass** mindestens ein Reibelement (23; 26) und/oder Reibelementkörper (18; 15)
a) aus Kunststoff, insbesondere aus POM und/oder als Spritzgussteil, oder
b) aus Metall, insbesondere aus Aluminium und/oder als Frästeil, hergestellt ist.

14. Laborzentrifuge (1) nach einem der vorhergehenden Ansprüche, **dadurch gekennzeichnet, dass** die Reibelemente (23; 26)
a) bei einem Öffnungswinkel (7), welcher kleiner ist als ein Teilöffnungswinkel (33), beabstandet voneinander angeordnet sind, so dass zwischen diesen keine Normalkraft wirkt,
b) bei einem Öffnungswinkel (7), der dem Teilöffnungswinkel (33) entspricht, miteinander in Kontakt kommen und
c) bei einem Öffnungswinkel (7), der größer ist als der Teilöffnungswinkel (33), mit einer Normalkraft aneinandergepresst werden.

15. Laborzentrifuge (1) nach einem der vorhergehenden Ansprüche, **dadurch gekennzeichnet, dass** sich die Normalkraft zwischen den Reibelementen (23; 26) mit einer Annäherung an einen maximalen Öffnungswinkel (37) und/oder mit einer Annäherung an einen oder den Anschlag (30; 32) vergrößert.

16. Laborzentrifuge (1) nach einem der vorhergehenden Ansprüche, **dadurch gekennzeichnet, dass** das Reibelement (23; 26), welches mit dem Deckel (3) verschwenkt wird, an einem elastischen Teilbereich (34) des Deckels (3) abgestützt ist.

## Claims

1. Laboratory centrifuge (1) comprising
a) a base body (2),
b) a lid (3) being supported at the base body (2) for being pivoted about a pivoting axis (6) and
c) a damping device (38) which dampens the pivoting movement of the lid (3) relative to the base body (2),
**characterised in that**
d) the damping device (38) comprises a friction element (26) held by the base body (2) and a friction element (23) being pivoted together with the lid (3),
da) the friction elements (23, 26) being pressed against each other by a normal force so that the friction elements (23, 26) produce a friction force effecting a damping and
db) the normal force depending on the opening angle (7) of the lid (3) relative to the base body (2).

2. Laboratory centrifuge (1) of claim 1, **characterised in that** the normal force has an orientation parallel to the pivoting axis (6).

3. Laboratory centrifuge (1) of claim 1, **characterised in that** the normal force is effective in a plane having an orientation transverse to the pivoting axis (6).

4. Laboratory centrifuge (1) of claim 1 or 2, **characterised in that** at least one friction element (23; 26) comprises a helical surface (24; 29) extending around the pivoting axis (6).

5. Laboratory centrifuge (1) of claim 4, **characterised in that** the helical surface (24; 29) comprises an inclination of 5 to 15 mm, in particular of 8 to 12 mm.

6. Laboratory centrifuge (1) of claim 1 or 2, **characterised in that** at least one friction element (23; 26) comprises a cam surface (42) extending around the pivoting axis (6) or an inner surface (44), the distance (43; 45) of which from the pivoting axis (6) changes in circumferential direction around the pivoting axis (6).

7. Laboratory centrifuge (1) of one of the preceding claims, **characterised in that** a stop (30; 32) is provided for limiting the pivoting movement of the lid (3).

8. Laboratory centrifuge (1) of claim 7 referring back to one of claims 4 to 6, **characterised in that** the stop (30; 32) is formed by a stop surface (39; 40) which directly follows to the cam surface (42), inner surface (44) and/or helical surface (24; 29).

9. Laboratory centrifuge (1) of one of the preceding claims, **characterised in that** the stop (30; 32) and the friction element (23; 26) are formed integrally.

10. Laboratory centrifuge (1) of one of the preceding claims, **characterised in that** the friction element (26) held at the base body (2) comprises a friction element body (25) which is mounted to a bearing block (11) of the base body (2).

11. Laboratory centrifuge (1) of one of the preceding claims, **characterised in that** the friction element (23) pivoted together with the lid (3) comprises a friction element body (18) which is mounted to the lid (3).

12. Laboratory centrifuge (1) of claim 11, **characterised in that** the friction element body (18) which forms the friction element (23) pivoted together with the lid (3) forms a bearing lug (13).

13. Laboratory centrifuge (1) of one of claims 10 to 12, **characterised in that** at least one friction element (23; 26) and/or friction element body (18; 15) is made
a) of a plastic material, in particular of POM and/or as an injection moulding piece, or
b) of metal, in particular of aluminium and/or as a milling part.

14. Laboratory centrifuge (1) of one of the preceding claims, **characterised in that** the friction elements (23; 26)
a) are located distant from each other for an opening angle (7) which is smaller than a partial opening angle (33) so that there is no normal force between the friction elements (23; 26),
b) contact each other for an opening angle (7) which corresponds to the partial opening angle (33) and
c) are pressed against each other with a normal force for an opening angle (7) which is larger than the partial opening angle (33).

15. Laboratory centrifuge (1) of one of the preceding claims, **characterised in that** the normal force between the friction elements (23; 26) increases when approaching a maximum opening angle (37) and/or when approaching a stop (30; 32) or the stop (30; 32).

16. Laboratory centrifuge (1) of one of the preceding claims, **characterised in that** the friction element (23; 26) which is pivoted together with the lid (3) is supported at an elastic region (34) of the lid (3).

## Revendications

1. Centrifugeuse de laboratoire (1) avec
a) un corps de base (2),
b) un couvercle (3) logé de manière pivotante autour d'un axe de pivotement (6) sur le corps de base (2) et
c) un dispositif d'amortissement (38) qui amortit le mouvement de pivotement du couvercle (3) par rapport au corps de base (2),
**caractérisée en ce que**
d) le dispositif d'amortissement (38) est constitué d'un élément de friction (26) maintenu sur le corps de base (2) et d'un élément de friction (23) pivoté avec le couvercle (3),
da) les éléments de friction (23, 26) étant comprimés l'un contre l'autre avec une force normale, de façon à ce que les éléments de friction (23, 26) génèrent une force de friction produisant un amortissement et
db) la force normale dépendant de l'angle d'ouverture (7) du couvercle (3) par rapport au corps de base (2).

2. Centrifugeuse de laboratoire (1) selon la revendication 1, **caractérisée en ce que** la force normale est orientée parallèlement à l'axe de pivotement (6).

3. Centrifugeuse de laboratoire (1) selon la revendication 1, **caractérisée en ce que** la force normale agit dans un plan qui est orienté transversalement par rapport l'axe de pivotement (6).

4. Centrifugeuse de laboratoire (1) selon la revendication 1 ou 2, **caractérisée en ce qu'**au moins un élément de friction (23; 26) est constitué d'une surface hélicoïdale (24; 29) s'étendant autour de l'axe de pivotement (6).

5. Centrifugeuse de laboratoire (1) selon la revendication 4, **caractérisée en ce que** la surface hélicoïdale (24; 29) présente un pas de 5 à 15 mm, plus particulièrement de 8 à 12 mm.

6. Centrifugeuse de laboratoire (1) selon la revendication 1 ou 2, **caractérisée en ce qu'**un élément de friction (23; 26) est constitué d'une surface à cames (42) ou d'une surface interne (44) s'étendant autour de l'axe de pivotement (6), dont la distance (43; 45) par rapport à l'axe de pivotement (6) varie dans la direction circonférentielle autour de l'axe de pivotement (6).

7. Centrifugeuse de laboratoire (1) selon l'une des revendications précédentes, **caractérisée en ce qu'**une butée (30; 32) est présente pour limiter le mouvement de pivotement du couvercle (3).

8. Centrifugeuse de laboratoire (1) selon la revendication 7, en référence à l'une des revendications 4 à 6, **caractérisée en ce que** la butée (30; 32) est constituée d'une surface de butée (39; 40) qui se raccorde directement à la surface à cames (42), à la surface interne (44) et/ou à la surface hélicoïdale (24; 29).

9. Centrifugeuse de laboratoire (1) selon l'une des revendications précédentes, **caractérisée en ce que** la butée (30; 32) est conçue d'une seule pièce avec l'élément de friction (23; 26).

10. Centrifugeuse de laboratoire (1) selon l'une des revendications précédentes, **caractérisée en ce que** l'élément de friction (26) maintenu sur le corps de base (2) est constitué d'un corps d'élément de friction (25) qui est monté sur un support de palier (11) du corps de base (2).

11. Centrifugeuse de laboratoire (1) selon l'une des revendications précédentes, **caractérisée en ce que** l'élément de friction (23) pivoté avec le couvercle (3) est constitué d'un corps d'élément de friction (18) qui est monté sur le couvercle (3).

12. Centrifugeuse de laboratoire (1) selon la revendication 11, **caractérisée en ce que** le corps d'élément de friction (18), qui constitue l'élément de friction (23) pivoté avec le couvercle (3), comprend un oeillet de palier (13).

13. Centrifugeuse de laboratoire (1) selon l'une des revendications 10 à 12, **caractérisée en ce qu'**au moins un élément de friction (23; 26) et/ou un corps d'élément de friction (18; 15)
a) est constitué d'une matière plastique, plus particulièrement de POM et/ou est fabriqué comme une pièce injectée ou
b) est constituée de métal, plus particulièrement d'aluminium et/ou est fabriqué comme une pièce fraisée.

14. Centrifugeuse de laboratoire (1) selon l'une des revendications précédentes, **caractérisée en ce que** les éléments de friction (23; 26)
a) dans le cas d'un angle d'ouverture (7) inférieur à un angle d'ouverture partielle (33), sont distants l'un de l'autre de façon à ce qu'aucune force normale n'agisse entre eux,
b) dans le cas d'un angle d'ouverture (7) égal à l'angle d'ouverture partielle (33), entrent en contact l'un avec l'autre et
c) dans le cas d'un angle d'ouverture (7) supérieur à l'angle d'ouverture partielle (33), sont comprimés l'un contre l'autre avec une force normale.

15. Centrifugeuse de laboratoire (1) selon l'une des revendications précédentes, **caractérisée en ce que** la force normale entre les éléments de friction (23; 26) augmente à l'approche d'un angle d'ouverture maximal (37) et/ou à l'approche d'une ou de la butée (30; 32).

16. Centrifugeuse de laboratoire (1) selon l'une des revendications précédentes, **caractérisée en ce que** l'élément de friction (23; 26), qui est pivoté avec le couvercle (3), est appuyé contre une partie élastique (34) du couvercle (3).
